Europäisches Patentamt

European Patent Office

Office européen des brevets

(19)

(11) Numéro de publication : **0 343 035 B1**

(12)                    **FASCICULE DE BREVET EUROPEEN**

(45) Date de publication du fascicule du brevet :
24.07.91 Bulletin 91/30

(51) Int. Cl.⁵ : **B62D 1/10, F16D 1/12**

(21) Numéro de dépôt : 89401285.5

(22) Date de dépôt : 09.05.89

(54) **Dispositif de réglage de la position angulaire d'un volant sur une colonne de direction de véhicle automobile.**

(30) Priorité : 19.05.88 FR 8806729

(43) Date de publication de la demande :
23.11.89 Bulletin 89/47

(45) Mention de la délivrance du brevet :
24.07.91 Bulletin 91/30

(84) Etats contractants désignés :
BE DE ES GB IT NL SE

(56) Documents cités :
FR-A- 981 997
FR-A- 2 527 156
FR-A- 2 557 992
GB-A- 284 106
US-A- 1 922 596

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Hoblingre, André**
**28 rue Vincent d'Indy**
**F-25700 - Valentigney (FR)**

(74) Mandataire : **Polus, Camille et al**
**c/o Cabinet Lavoix 2, Place d'Estienne d'Orves**
**F-75441 Paris Cedex 09 (FR)**

## Description

Les volants de direction de véhicule automobile comportent généralement une jante qui est reliée à un moyeu de fixation sur la colonne de direction par des branches sensiblement radiales. Il est bien connu des constructeurs que ces branches doivent avoir une position bien déterminée par rapport à la colonne de direction de façon, d'une part, à assurer une conduite confortable au conducteur du véhicule et, d'autre part, à permettre au moins en marche en ligne droite une visibilité totale du tableau de bord et un aspect visuel esthétique.

Or l'orientation angulaire et la transmission du couple entre le moyeu du volant et l'axe de volant sont généralement assurées en donnant aux faces en regard de ces deux organes, des profils cannelés ou polygonaux complémentaires, la position axiale du moyeu étant déterminée par un appui conique ou pyramidal. Dans ces conditions, l'imprécision de l'orientation du volant correspond au pas des cannelures ou à l'angle des facettes des profils polygonaux. On a donc été amené à multiplier le nombre des cannelures ou des facettes, ce qui a permis de réduire l'incertitude de position du volant mais ne l'a pas supprimée. Elle reste en effet de l'ordre de 10 degrés.

Pour remédier à cela, le dispositif décrit dans le FR-B-2 557 992 (correspondant au préambule de la revendication 1) associe au moyeu et à l'axe de volant un organe intermédiaire relié à chacun d'eux par un système de cannelures complémentaires, les deux systèmes étant différents. Aussi, une bague interposée entre l'axe de volant et le moyeu comporte sur sa face interne des moyens à cannelures de liaison à l'axe de volant et sur sa face externe des moyens à cannelures de liaison au moyeu du volant, l'un au moins de ces moyens à cannelures ayant des cannelures hélicoïdales. Le déplacement axial de la bague intermédiaire provoque ainsi un déplacement angulaire du moyeu par rapport à l'axe de volant et permet le réglage de la position angulaire du volant par rapport à la colonne de direction.

Toutefois, un tel dispositif est relativement complexe à réaliser, ce qui augmente son prix de revient, et présente un encombrement important.

La présente invention a pour but de remédier à ces inconvénients en fournissant un dispositif de réglage angulaire d'un volant par rapport à une colonne de direction qui soit particulièrement simple à réaliser et présente le même encombrement qu'une colonne de direction classique sans dispositif de réglage angulaire.

Cette invention a en effet pour objet un dispositif de réglage de position angulaire comportant un axe de volant tubulaire, un moyeu ayant un alésage axial qui comporte une portion tronconique d'appui sur une portée de forme correspondante de l'axe de volant, un organe intermédiaire relié à la fois à cet axe et au moyeu, et des moyens de serrage du moyeu sur l'axe tubulaire, dans lequel l'organe intermédiaire est un coulisseau monté à l'intérieur de l'axe de volant et muni d'au moins un doigt radial qui traverse une fente longitudinale de l'axe de volant et pénètre dans une rainure hélicoïdale interne du moyeu, de sorte que ce dernier est décalé angulairement par rapport à l'axe de volant lors du déplacement axial du coulisseau.

Selon un mode de réalisation, le coulisseau est un écrou qui est entraîné par une vis immobilisée axialement dans l'axe de volant.

La coopération du doigt radial simultanément avec la fente longitudinale du tube et la rainure hélicoïdale du moyeu assure un déplacement extrêmement précis de l'un par rapport à l'autre en utilisant un nombre minimum d'organes et en permettant l'emboîtement direct du moyeu sur l'axe de volant.

La description ci-dessous d'un mode de réalisation donné à titre d'exemple et représenté aux dessins annexés fera d'ailleurs ressortir les avantages et caractéristiques de l'invention. Sur ces dessins :

La figure 1 est une vue en coupe longitudinale d'un dispositif de réglage selon l'invention,

La figure 2 est une vue en perspective montrant l'extrémité de l'axe de volant destinée à porter le moyeu de ce dernier et l'écrou prêt à y être introduit.

La figure 3 est une vue en perspective du moyeu du volant, les branches et le cercle de ce dernier n'étant pas représentés pour simplifier la figure.

La figure 4 est une vue analogue à la Fig. 1 d'une variante de réalisation.

Comme le montrent les dessins, le dispositif de réglage suivant l'invention est destiné à régler les positions angulaires relatives d'un axe de volant 1 d'une colonne de direction et d'un moyeu de volant 2 qui est relié de la manière habituelle à une jante par des branches sensiblement radiales, mais qui a été représenté seul sur les dessins car les autres éléments peuvent avoir toute forme désirée sans que le dispositif de l'invention ait besoin d'être modifié.

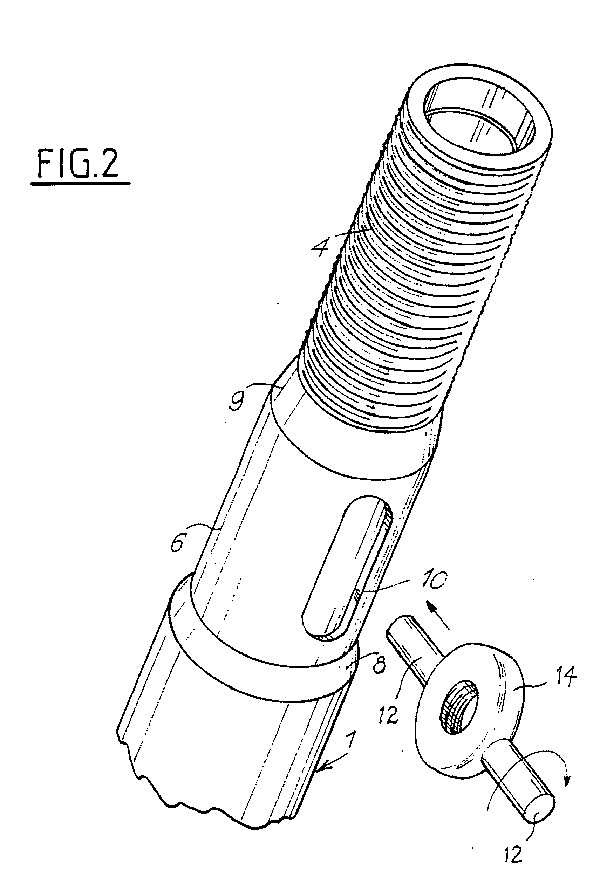

L'axe de volant 1 est un élément tubulaire creux (Fig. 2) dont l'extrémité de support du volant est munie d'un filetage 4 et qui forme une portée cylindrique 6 de réception du moyeu 2 suivie d'une portée tronconique 8 déterminant la position axiale de ce moyeu. La portée cylindrique 6 a un diamètre supérieur à celui de la partie filetée 4 et une portion tronconique 9 les réunit.

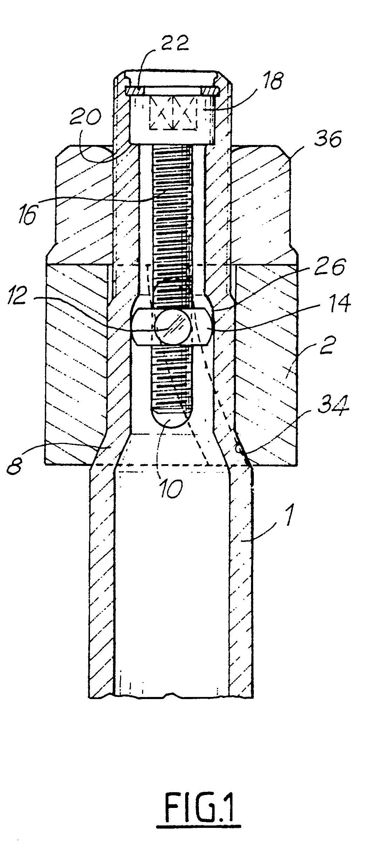

La portée cylindrique 6 comporte au moins une fente longitudinale 10 et, de préférence, comme représenté sur les figures 1 et 2, deux fentes diamétralement opposées qui s'étendent sur la majeure partie de sa hauteur. Dans chacune des fentes 10 se déplace un doigt radial 12 qui est solidaire d'un coulisseau 14 en forme d'écrou cylindrique, monté à l'intérieur du tube 1. Une vis 16, ayant une tête 18 bloquée axialement entre un épaulement interne 20 du tube 1 et une rondelle 22 sertie à l'extrémité de ce tube, est vissée dans l'écrou 14 de façon à provoquer le déplacement axial de ce dernier lorsqu'elle est elle-même entraînée en rotation.

Dans la position extrême représentée sur la figure 1, l'écrou 14 vient buter contre la surface interne 26 du tronc de cône 9 reliant la portion filetée 4 et la portée cylindrique 6 du tube 1.

Les dimensions des fentes 10 sont choisies de manière à être supérieures à celles de l'écrou 14 et à permettre aussi une introduction facile de l'écrou dans l'axe de volant, lorsque cet écrou est dans la position représentée sur la Fig. 2 dans laquelle son axe est perpendiculaire à celui des fentes 10, tandis que les doigts 12 peuvent traverser ces fentes. Un pivotement de 90° autour des doigts 12 suffit ensuite à placer cet écrou en regard de la vis 16 et à permettre le vissage.

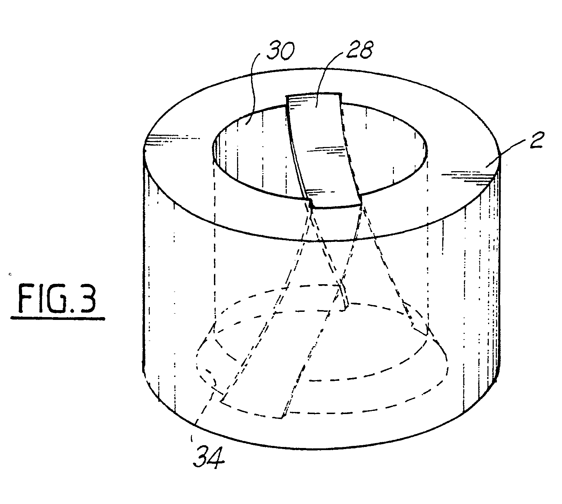

Chacun des doigts radiaux 12 a une longueur telle qu'il traverse la totalité de la paroi du tube 1 dans la fente 10 correspondante et pénètre dans une rainure 28 ménagée dans la surface interne 30 du moyeu 2, de préférence sur toute la hauteur de celui-ci. En effet comme le montre plus particulièrement la figure 3, le moyeu 2 a une forme sensiblement cylindrique et comporte un alésage axial 30 dont le diamètre est sensiblement égal au diamètre extérieur de la portée cylindrique 6 du tube 1. Cet alésage 32 est toutefois terminé par une partie évasée tronconique 34 d'appui sur la portée conique 8 du tube 1. En outre, une rainure hélicoïdale 28 est ménagée dans la face interne 30 du moyeu 2 pour coopérer avec chacun des doigts radiaux 12.

L'ensemble ainsi formé est maintenu dans la position de réglage désiré au moyen d'un écrou 36 vissé sur la partie filetée 4 du tube 1 et serrant le moyeu 2 contre la portée tronconique 8.

Lors de l'assemblage du volant sur la colonne de direction, l'écrou 14 est d'abord amené dans une position médiane de sorte que les doigts radiaux 12 se trouvent sensiblement au milieu de la fente 10 correspondante, puis le moyeu 2 est enfilé sur la portée cylindrique du tube 1 en faisant glisser chacune des rainures hélicoïdales 28 sur l'un des doigts radiaux 12 qui font saillie hors des fentes longitudinales 10 jusqu'au moment où la partie évasée 34 vient buter contre la portée conique 8. Si, dans cette position, le volant n'est pas correctement orienté par rapport à la colonne de direction et à la planche de bord, il suffit de faire tourner la vis 16 en agissant depuis l'extérieur sur la tête 18 pour provoquer un déplacement axial du coulisseau 14 vers le haut ou vers le bas et obliger chaque doigt radial 12 à se déplacer à la fois dans la fente longitudinale 10 du tube 1 et dans la rainure hélicoïdale 28 du moyeu 2. Le moyeu 2 effectue alors un déplacement angulaire dont l'importance dépend de la pente de la rainure hélicoïdale, et est ainsi amené progressivement dans la position de réglage précis désiré. De préférence, la pente de la rainure 28 est importante, l'angle de réglage maximum nécessaire étant de l'ordre de + ou − 15 degrés de sorte que le réglage peut être extrêmement précis et qu'on obtient pratiquement un réglage micrométrique.

Une fois la position désirée obtenue l'écrou 36 est vissé sur le filetage 4 pour immobiliser rigoureusement le moyeu 2.

On constate que le déplacement angulaire du moyeu 2 permet d'absorber la totalité de la tolérance angulaire résultant de la cinématique de la commande de direction depuis les roues jusqu'au volant.

Par ailleurs, le dispositif de réglage étant pratiquement contenu à l'intérieur de l'axe de volant tubulaire, et le moyeu étant emboîté directement sur ce dernier, l'ensemble présente le même encombrement qu'une colonne de direction dépourvue de dispositif de réglage. En outre les éléments de liaison entre le coulisseau, l'axe de volant et le moyeu sont particulièrement simples. Aucun risque de déréglage ni de détérioration n'est donc à craindre et le dispositif peut facilement être réalisé en grande série à un prix de revient relativement faible.

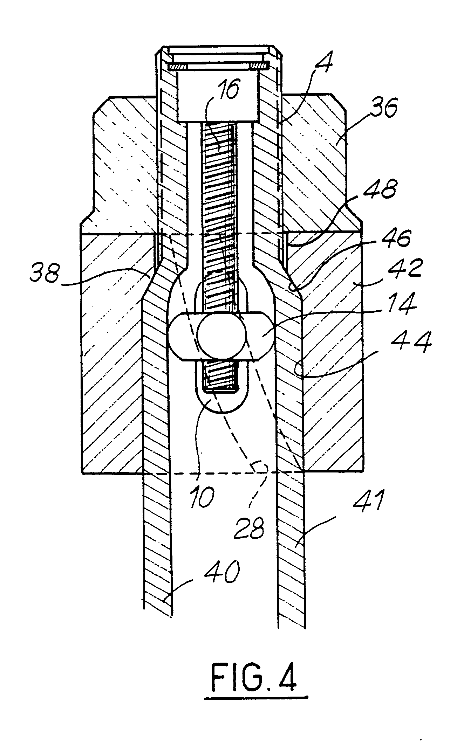

Bien entendu, le dispositif de réglage est adapté à divers types de colonnes de direction. Il peut par exemple, comme le montre la Fig. 4, être utilisé sur une colonne dont l'axe de volant creux 41 ne comporte qu'une seule portée conique 38 qui relie la partie étroite filetée 4 au corps 40 de l'axe. Dans ce cas, l'alésage 44 du moyeu 42, qui a un diamètre correspondant à celui du corps 40, est rétréci par une portée conique 46 et terminé par un alésage 48 dont le diamètre est plus petit mais cependant supérieur à celui du filetage 4.

Dans la paroi de ces alésages est ménagée une rainure hélicoïdale 28 de réception de chaque doigt radial 12 tandis que la portion du corps 40 voisine de la portée conique 38 comporte des fentes longitudinales 10. Ainsi le dispositif de réglage de la figure 4 peut être assemblé et utilisé de la même manière que celui des figures 1 à 3. Il assure la même sécurité de fonctionnement.

## Revendications

1. Dispositif de réglage de la position angulaire d'un volant sur une colonne de direction comportant un axe de volant tubulaire (1), un moyeu (2) ayant un alésage axial (30) qui comporte une portion tronconique (34, 46) d'appui sur une portée (8, 38) de forme correspondante de l'axe de volant, un organe intermédiaire (14) relié d'une part à l'axe de volant et d'autre part au moyeu, et des moyens (36) de serrage, caractérisé en ce que l'organe intermédiaire est un coulisseau (14) monté à l'intérieur de l'axe de volant (1) et muni d'au moins un doigt radial (12) qui traverse une fente longitudinale (10) de cet axe (1) et pénètre dans une rainure hélicoïdale interne (28) du moyeu, de sorte que ce dernier est décalé angulairement lors d'un déplacement axial du coulisseau.

2. Dispositif suivant la revendication 1, caractérisé en ce que le coulisseau (14) est un écrou cylindrique qui est entraîné par une vis (16) immobilisée axialement dans l'axe tubulaire (1).

3. Dispositif suivant l'une des revendications 1 et 2, caractérisé en ce que le coulisseau (14) porte deux doigts radiaux (12) coaxiaux.

4. Dispositif suivant l'une des revendications précédentes, caractérisé en ce que le moyeu (2) comporte un alésage interne cylindrique (30, 44) de contact avec une portée cylindrique (6, 40) de l'axe de volant (1, 41), et en ce que la ou les fentes (10) sont pratiquées dans cette portée cylindrique.

5. Dispositif suivant l'une des revendications précédentes, caractérisé en ce que le moyeu (2) comporte dans sa face interne au moins une rainure hélicoïdale (28) s'étendant sur toute sa hauteur.

6. Dispositif suivant l'une des revendications précédentes, caractérisé en ce que chacune des fentes longitudinales (10) de l'axe de volant a une longueur supérieure au diamètre de l'écrou.

7. Dispositif suivant l'une des revendications précédentes, caractérisé en ce que l'axe de volant comporte à son extrémité une partie filetée (4) sur laquelle est vissé un écrou (36) de serrage du moyeu dans la position désirée.

## Patentansprüche

1. Vorrichtung zur Einstellung der Winkellage eines Lenkrads auf einer Lenksäule mit einer rohrförmigen Lenkradachse (1), einer Nabe (2), welche eine axiale Bohrung (30) aufweist, die einen kegelstumpfförmigen Anlageabschnitt (34, 46) für eine Anlage an einer Auflagefläche (8, 38) entsprechender Form der Lenkradachse aufweist, einem Zwischenelement (14), welches einerseits mit der Lenkradachse und andererseits mit der Nabe verbunden ist, und Spannmitteln (36), dadurch gekennzeichnet, daß das Zwischenelement ein Gleitstück (14) ist, welches im Inneren der Lenkradachse (1) angebracht und mit wenigstens einem radialen Finger (12) versehen ist, welcher einen Längsschlitz (10) dieser Achse (1) durchsetzt und in eine wendelförmige innere Nut (28) der Nabe eingreift, so daß letztere bei einer axialen Verschiebung des Gleitstücks winkelmäßig versetzt wird.

2. Vorrichtung nach Anspruch 1, dadurch gekennzeichnet, daß das Gleitstück (14) eine zylindrische Mutter ist, welche durch eine in der Rohrachse (1) axial festgestellte Schraube (16) mitgenommen wird.

3. Vorrichtung nach einem der Ansprüche 1 und 2, dadurch gekennzeichnet, daß das Gleitstück (14) zwei koaxiale radiale Finger (12) trägt.

4. Vorrichtung nach einem der vorstehenden Ansprüche, dadurch gekennzeichnet, daß die Nabe (2) eine innere zylindrische Bohrung (30, 44) zur Berührung mit einer zylindrischen Auflagefläche (6, 40) der Lenkradachse (1, 41) aufweist, und daß der oder die Schlitze (10) in dieser zylindrischen Auflagefläche ausgebildet sind.

5. Vorrichtung nach einem der vorstehenden Ansprüche, dadurch gekennzeichnet, daß die Nabe (2) in ihrer Innenfläche wenigstens eine wendelförmige Nut (28) aufweist, die sich über ihre gesamte Höhe erstreckt.

6. Vorrichtung nach einem der vorstehenden Ansprüche, dadurch gekennzeichnet, daß jeder der Längsschlitze (10) der Lenkradachse eine über dem Durchmesser der Mutter liegende Länge hat.

7. Vorrichtung nach einem der vorstehenden Ansprüche, dadurch gekennzeichnet, daß die Lenkradachse an ihrem Ende einen Gewindeabschnitt (4) aufweist, auf welchen eine Mutter (36) zur Sicherung der Nabe in der gewünschten Stellung aufgeschraubt ist.

## Claims

1. Device for adjusting the angular position of a steering wheel on a steering column incorporating a tubular steering wheel shaft (1), a hub (2) having an axial bore (30) which has a tapered portion (34, 46) bearing on a correspondingly shaped bearing surface (8, 38) on the steering wheel shaft, an intermediate component (14) connected on the one hand to the steering wheel shaft and on the other hand to the hub, and clamping means (36), characterised in that the intermediate component is a slider (14) mounted inside the steering wheel shaft (1) and fitted with at least one radial pin (12) which passes through a longitudinal slot (10) in this shaft (1) and enters an internal helical groove (28) in the hub, so that the latter is offset angularly when the slider is moved axially.

2. Device according to claim 1, characterised in that the slider (14) is a cylindrical nut which is driven by a bolt (16) immobilised axially in the tubular shaft (1).

3. Device according to one of claims 1 and 2, characterised in that the slider (14) bears two coaxial radial pins (12).

4. Device according to one of the preceding claims, characterised in that the hub (2) incorporates a cylindrical internal bore (30, 44) for making contact with a cylindrical bearing surface (6, 40) of the steering wheel shaft (1, 41), and in that the slot or slots (10) are provided in this cylindrical bearing surface.

5. Device according to one of the preceding claims, characterised in that the hub (2) has in its

4

internal face at least one helical groove (28) extending over its entire height.

6. Device according to one of the preceding claims, characterised in that each of the longitudinal slots (10) in the steering wheel shaft has length greater than the diameter of the nut.

7. Device according to one of the preceding claims, characterised in that the steering wheel shaft has at its end a threaded part (4) on which is screwed a nut (36) for clamping the hub in the desired position.

## FIG.1

# FIG.2

FIG.3

## FIG.4